# EUROPÄISCHE PATENTSCHRIFT

(11) **EP 3 108 138 B1**
(45) Veröffentlichungstag und Bekanntmachung des Hinweises auf die Patenterteilung: **26.08.2020**
(21) Anmeldenummer: 14819019.2
(22) Anmeldetag: 23.12.2014
(51) Int. Cl.: F02M 59/44, F04B 53/14, F02M 59/02, F02M 59/48, F04B 1/04

(54) **KOLBEN-KRAFTSTOFFPUMPE FÜR EINE BRENNKRAFTMASCHINE**
PISTON FUEL PUMP FOR AN INTERNAL COMBUSTION ENGINE
POMPE À CARBURANT À PISTON POUR MOTEUR À COMBUSTION INTERNE

(30) Priorität: 17.02.2014 DE 102014202809
(43) Veröffentlichungstag der Anmeldung: 28.12.2016
(73) Patentinhaber: Robert Bosch GmbH, 70442 Stuttgart (DE)
(72) Erfinder: STRITZEL, Soeren, 71032 Boeblingen (DE); JAHN, Heiko, 71732 Tamm (DE)
(86) Internationale Anmeldenummer: PCT/EP2014/079159
(87) Internationale Veröffentlichungsnummer: WO 2015/120946

(56) Entgegenhaltungen:
- EP-A1- 2 620 633
- WO-A1-98/04853
- WO-A1-2014/095781
- DE-A1-102004 026 893
- DE-A1-102008 043 846
- JP-A- H1 122 630
- JP-A- 2002 018 912
- US-A- 2 691 558
- US-A- 6 109 896

## Beschreibung

### Stand der Technik

Die Erfindung betrifft eine Kolben-Kraftstoffpumpe nach dem Oberbegriff des Anspruchs 1.

Vom Markt bekannt sind Kraftstoffsysteme von Brennkraftmaschinen, bei denen der Kraftstoff aus einem Kraftstofftank mittels einer mechanisch angetriebenen Kolben-Kraftstoffpumpe unter hohem Druck in ein Kraftstoffrail gefördert wird und von dort aus über Injektoren in Brennräume einer Brennkraftmaschine gelangt.

Beispielsweise bei der aus der DE 10 2004 063 074 A1 bekannten Kolben-Kraftstoffpumpe ist ein verschiebbar gelagerter Pumpenkolben vorgesehen, der Kraftstoff in einem Förderraum der Kolben-Kraftstoffpumpe verdichtet. Der Pumpenkolben ist in einer Kolbenbuchse durch eine enge Passung gleitend und mit einem geringen Dichtspalt geführt. Die Kolbenbuchse muss zum Abstützen und Abdichten über eine Spaltdichtung eine gewisse Länge aufweisen und gegebenenfalls große Querkräfte aufnehmen. Daher wird die Kolbenbuchse oft aus Stahl hergestellt. Aufgrund hoher Toleranzanforderungen wird darüber hinaus eine sogenannte "Kolbenpaarung" verwendet, d.h. jedem Pumpengehäuse wird ein bestimmter Kolben zugeordnet. Ferner muss der Zylinder im Pumpengehäuse aufwendig gehont werden. Es besteht ein Bedürfnis nach einer Kraftstoff-Kolbenpumpe, deren Herstellung weniger aufwendig ist. JPH1122630 A offenbart eine weitere Kolben-Kraftstoffpumpe.

### Offenbarung der Erfindung

Das der vorliegenden Erfindung zu Grunde liegende Problem wird durch eine Kraftstoff-Kolbenpumpe mit den Merkmalen des Anspruchs 1 gelöst. Vorteilhafte Weiterbildungen der Erfindung sind in Unteransprüchen genannt. Weitere für die Erfindung wichtige Merkmale finden sich darüber hinaus in der nachfolgenden Beschreibung und in der Zeichnung.

Die erfindungsgemäße Kraftstoff-Kolbenpumpe hat den Vorteil, dass eine Kolbenbuchse und die entsprechende hochgenaue Passung des Kolbens in der Kolbenbuchse nicht mehr zwingend erforderlich sind und somit erhebliche Kosten eingespart werden können. Stattdessen weist die Kolben-Kraftstoffpumpe eine am Umfang des Pumpenkolbens angeordnete Dichtung auf, die durch eine auf den Pumpenkolben aufgeschobene Kappe axial gehalten ist. Insbesondere weist die Kolben-Kraftstoffpumpe eine am Umfang des Pumpenkolbens angeordnete Dichtung auf, die zwischen einer auf den Pumpenkolben aufgeschobenen Kappe und einem am Pumpenkolben ausgebildeten oder einem am Pumpenkolben festgelegten Absatz axial gehalten ist.

Grundsätzlich kann die am Umfang des Pumpenkolbens angeordnete Dichtung insofern durch die auf den Pumpenkolben aufgeschobene Kappe axial gehalten sein, dass die Kappe an der Dichtung zur Anlage kommt. Erfindungsgemäß ist die Dichtung durch die Kappe vorgespannt. In diesem Fall wirkt insbesondere eine Kraft zwischen Dichtung und Kappe, die die Dichtung in axialer Richtung zusammendrückt.

Bei der Kraftstoff-Kolbenpumpe handelt es sich insbesondere um eine Pumpe, die ein Pumpengehäuse aufweist, in dem ein von dem Pumpenkolben begrenzter Arbeitsraum ausgebildet ist. Die Verdichtung des Kraftstoffs erfolgt insbesondere in diesem Arbeitsraum, insbesondere durch eine den Arbeitsraum verkleinernde axiale Bewegung des Pumpenkolbens. Es erfolgt insbesondere eine Verdichtung des Kraftstoff im Arbeitsraum auf ein hohes Druckniveau, beispielsweise auf 100bar bis 600bar.

Die erfindungsgemäße Dichtung ist insbesondere zwischen dem Arbeitsraum und einem Niederdruckbereich der Pumpe ausgebildet. Der Druck im Niederdruckbereich ist geringer als das hohe Druckniveau, das im Arbeitsraum der Pumpe generiert wird. Das Druckniveau im Niederdruckbereich kann beispielsweise bei 3bar bis 10bar liegen und durch eine separate Vorpumpe generiert sein.

Der Arbeitsraum ist insbesondere über ein Auslassventil mit einem Pumpenauslass verbunden und insbesondere über ein elektrisch ansteuerbares Einlassventil mit einem Pumpeneinlass verbunden. Das elektrisch ansteuerbare Einlassventil kann insbesondere als Mengensteuerventil ausgebildet sein. Optional kann zusätzlich zwischen Pumpeneinlass und Arbeitsraum ferner eine Dämpfungseinrichtung zur Dämpfung von Pulsationen im Niederdruckbereich der Pumpe vorgesehen sein.

Die Dämpfungseinrichtung zur Dämpfung von Pulsationen im Niederdruckbereich kann beispielsweise ein zwischen zwei Membranen eingeschlossenes Gasvolumen umfassen, Details hinsichtlich der Dämpfungseinrichtung können wie in der DE10327408A1 gezeigt ausgebildet sein.

Ein weiteres zwischen Pumpenauslass und Arbeitsraum angeordnetes Ventil, das antiparallel zum Auslassventil angeordnet ist, kann vorgesehen sein und insbesondere als Druckbegrenzungsventil für einen mit der Pumpe verbindbaren Hochdruckspeicher wirken.

Vorzugsweise sind das Auslassventil und/oder das Einlassventil und/oder das Druckbegrenzungsventil ortsfest zu dem Pumpengehäuse und insofern auch ortsfest zu dem Pumpenzylinder fixiert. Eine Fixierung dieser Komponenten an dem Pumpenkolben scheidet insofern insbesondere aus. Es ergibt sich der Vorteil, dass die Masse des Pumpenkolbens gering ist und somit die Dynamik bzw. Leichtgängigkeit der Pumpe verbessert ist.

Vorzugsweise ist zusätzlich oder alternativ der Pumpenkolben als Vollkörper ausgebildet, sodass er den bei der Kraftstoffeinspritzung, insbesondere bei der Benzindirekteinspritzung, hohen wirkenden Drücken ohne Verformung standhalten kann. Eine Durchströmbarkeit des Pumpenkolbens in Längsrichtung scheidet insofern aus.

Weitere Details der Anordnung von Arbeitsraum, Auslassventil und Druckbegrenzungsventil zueinander und im Pumpenkörper können beispielsweise wie in der DE102004013307A1 gezeigt ausgebildet sein.

Der Pumpenzylinder kann in einer im Pumpenkörper fixierten Buchse ausgebildet sein. Alternativ kann der Pumpenzylinder auch unmittelbar im Pumpenkörper vorgesehen sein.

Der Pumpenkörper, der Pumpenkolben, der Pumpenzylinder, und/oder alle Pumpenteile, die mit dem Kraftstoff in Berührung kommen, bestehen bevorzugt lediglich aus Stählen und aus Kunstoffen, sodass im Ergebnis eine hohe Beständigkeit auch gegenüber ethanolhaltigen Kraftstoffen und/oder anderen aggressiven Kraftstoffen gegeben ist.

Durch die erfindungsgemäße Vorsehung einer Kappe, durch die die Dichtung axial gehalten ist, erfolgt eine Absicherung der mit der Dichtung verbundenen Dicht und Lagerfunktionen über Lebensdauer der Pumpe.

Wirken ferner ausgehend von der Kappe Kräfte in axialer Richtung auf die Dichtung, so wird diese vorgespannt und kann Dichtfunktionen und Lagerfunktionen nochmals verbessert erfüllen.

Die Kappe ist erfindungsgemäß auf den Pumpenkolben aufgeschoben. Wenngleich hiervon grundsätzlich ein teilweises Aufschieben umfasst ist, ist es zur Verbesserung der Stabilität des Verbundes bzw. zur Minimierung bewegter Massen vorteilhaft, wenn die Kappe bezogen auf ihre Längserstreckung überwiegend oder sogar ganz auf den Pumpenzylinder aufgeschoben ist.

Aus Sicht der Kappe gesehen ist also der Pumpenkolben insbesondere im Inneren der Kappe angeordnet, und zwar insbesondere so, dass er das Innere der Kappe teilweise, überwiegend (zum Beispiel mehr als 30% oder mehr 50% oder mehr als 85% des Volumens des Inneren der Kappe) oder sogar vollständig ausfüllt.

Vorzugsweise ist die Kappe an dem Pumpenkolben fixiert, beispielsweise aufgepresst. Vorzugsweise wirken hierbei zwischen der Kappe und dem Pumpenkolben Kräfte in radialer Richtung. Die Pressung zwischen Kappe und Pumpenkolben hat gegenüber anderen Verbindungsarten, die gleichwohl auch denkbar sind, den Vorteil, besonders robust und kostengünstig zu sein.

Bevorzugt ist die Kappe einstückig, beispielsweise als Hülse oder als Becher ausgebildet.

Die Ausbildung der Kappe als Becher, mit einer, beispielsweise zylindermantelförmigen Becherwand, und einem, beispielsweise kreisflächenförmigen, Becherboden hat den Vorteil, dass die Kappe mit der Becherwand voran auf den Pumpenkolben aufgeschoben werden kann. Weiterhin kann der Becherboden als Anschlag beim Aufschieben der Kappe auf den Pumpenkolben wirken. Der Becherboden liegt insofern bevorzugt an der Stirnseite des Pumpenkolbens an. Bevorzugt steht lediglich der Becherboden axial über den Kolben über, nicht jedoch die Becherwand.

Im Becherboden ist vorzugsweise ein Loch vorgesehen, durch das im Becher befindliche Luft oder dergleichen beim Aufschieben des Bechers auf den Kolben entweichen kann. Vorzugsweise ist das Loch als kleines Loch ausgebildet, das heißt, seine Querschnittsfläche beträgt weniger als ½, insbesondere sogar weniger als 1/10, der Querschnittfläche des Becherbodens.

Die Ausbildung der Kappe als Hülse, also insbesondere als zweiseitig offener Ring oder zweiseitig offenes Rohr, hat den Vorteil einer Material- und Gewichtsersparnis und einer Minimierung der bei Betrieb der Pumpe bewegten Masse. Bevorzugt ist diese Hülse entlang ihrer überwiegenden Längserstreckung auf den Kolben aufgeschoben oder sogar entlang ihrer gesamten Längserstreckung auf den Kolben aufgeschoben. Insbesondere steht sie axial nicht über den Kolben über.

Es kann bevorzugt sein, dass die Kappe an dem Pumpenkolben spaltfrei anliegt. Insbesondere treten weder in radialer noch axialer Richtung Spalte oder offene oder geschlossene Hohlräume zwischen Kappe und Pumpenkolben auf.

Anderseits kann es aber auch bevorzugt sein, dass die Kappe an dem Pumpenkolben nur stellenweise, insbesondere nur in einem axialen Teilbereich der Kappe, anliegt. Im übrigen axialen Teilbereich der Kappe kann zwischen Kappe und Pumpenkolben ein Spalt ausgebildet sein. Dadurch, dass der Bereich, an dem die Kappe am Pumpenkolben anliegt, vermindert ist, können in diesem Bereich besonders hohe radiale Kräfte generiert werden. Die Montage der Kappe auf den Kolben kann daher besonders robust ausgeführt werden.

Die Kappe besteht bevorzugt aus Stahl, bevorzugt aus dem gleichen Stahl wie der Pumpenkolben, beispielsweise aus einem rostfreien Stahl. Alternativ können auch verschiedene Stähle für Kappe und Pumpenkolben verwendet werden.

Insbesondere bei einem Durchmesser der Kappe im Bereich von 6 bis 16mm und/oder einer Länge der Kappe im Bereich von 8 bis 18mm ist es bevorzugt, dass die Kappe eine Wandstärke von 0,6 bis 1,6mm aufweist. Die Kappe kann kostengünstig als Tiefziehteil hergestellt sein.

Erfindungsgemäß ist vorgesehen, dass die Dichtung durch die Kappe axial vorgespannt ist. Insbesondere kann die Dichtung hierbei durch die Kappe einseitig axial gehalten bzw. vorgespannt sein und eine weitere Halterung bzw. Vorspannung in der Gegenrichtung vorgesehen sein.

So kann die Dichtung zwischen der Kappe und einem Absatz des Pumpenkolbens axial gehalten, insbesondere axial vorgespannt sein. Solch ein Absatz des Pumpenkolbens kann beispielsweise die Form eines um den Kolben umlaufenden Ringes haben. Der Absatz kann einstückig mit dem Pumpenkolben ausgebildet sein.

Alternativ ist es auch denkbar, dass der Absatz an einem weiteren Teil ausgebildet ist, das mit dem Pumpenkolben verbunden ist. Es kann sich beispielsweise um einen Sprengring handeln, der in einer Nut des Pumpenkolbens einliegt.

Eine weitere vorteilhafte Alternative hierzu sieht vor, dass die Dichtung zwischen der Kappe und einem weiteren am Pumpenkolben fixierten Halteelement axial gehalten, insbesondere axial vorgespannt ist. Das weitere am Pumpenkolben fixierte Halteelement kann beispielsweise ebenfalls auf den Pumpenkolben axial aufgeschoben sein und sich radial und/oder axial an dem Pumpenkolben abstützen. Bevorzugt ist das weitere am Pumpenkolben fixierte Halteelement auf den Pumpenkolben axial aufgeschoben und die Kappe radial und/oder axial über das weitere am Pumpenkolben fixierte Halteelement geschoben.

Eine Weiterbildung der Erfindung, insbesondere dieser Alternativen, sieht vor, dass der Pumpenkolben im Bereich der Dichtung, insbesondere sogar der gesamte Pumpenkolben, einen festen Durchmesser aufweist. Im Vergleich zu Pumpenkolben, an denen ein Absatz oder ein Stufe vorgesehen ist, reduziert sich der Herstellungsaufwand weiter. Beispielsweise können Pumpenkolben gemäß dieser Weiterbildung in einem Durchgangsschleifverfahren, also mit fest positionierten Schleifscheiben, bearbeitet werden.

Nachfolgend werden Beispiele der vorliegenden Erfindung unter Bezugnahme auf die beiliegenden Zeichnungen näher erläutert.

In den Zeichnungen zeigen:
Figur 1 eine schematische Darstellung eines Kraftstoffsystems einer Brennkraftmaschine mit einem Ausschnitt einer erfindungsgemäßen Kolben-Kraftstoffpumpe
Figur 2 eine vergrößerte Schnittdarstellung des Ausschnitts der Kolben-Kraftstoffpumpe gemäß Figur 1
Figur 3 eine alternative Ausführungsform der Kolben-Kraftstoffpumpe
Figur 4 eine weitere alternative Ausführungsform der Kolben-Kraftstoffpumpe.
Die Figuren 5 und 6 zeigt die Dichtung axial von oben bzw. unten.

In der Figur 7 ist ein axialer Endbereich der Dichtung vergrößert dargestellt.

### Ausführungsformen

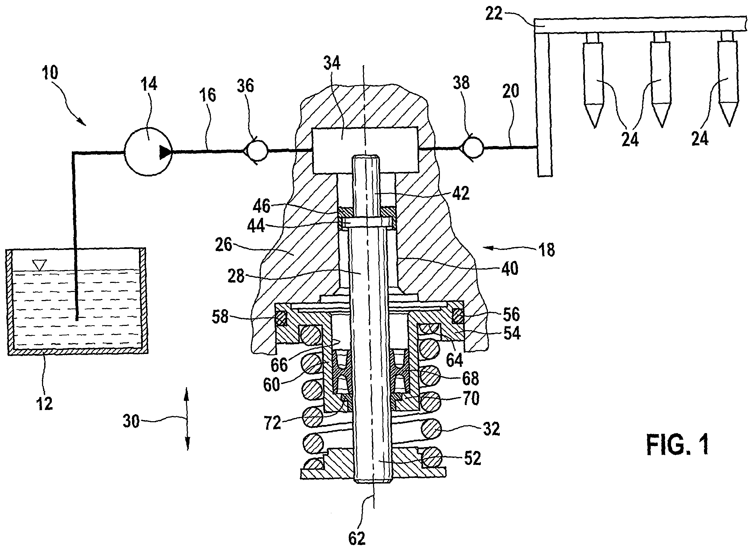

Ein Kraftstoffsystem einer Brennkraftmaschine trägt in Figur 1 insgesamt das Bezugszeichen 10. Es umfasst einen Kraftstoffbehälter 12, aus dem eine elektrische Vorförderpumpe 14 den Kraftstoff in eine Niederdruckleitung 16 fördert. Diese führt zu einer Hochdruckpumpe in Form einer Kolben-Kraftstoffpumpe 18. Von dieser führt eine Hochdruckleitung 20 zu einem Kraftstoffrail 22. An dieses sind mehrere Injektoren 24 angeschlossen, die den Kraftstoff direkt in ihnen jeweils zugeordnete Brennräume (nicht dargestellt) einspritzen.

Die Kolben-Kraftstoffpumpe 18 umfasst ein nur bereichsweise angedeutetes Pumpengehäuse 26, in dem ein Pumpenkolben 28 verschiebbar geführt bzw. gelagert ist. Dieser kann von einem nicht dargestellten Nockenantrieb in eine Hin- und Herbewegung versetzt werden, was durch einen seitlich gezeichneten Doppelpfeil 30 angedeutet ist. Der Pumpenkolben 28 wird von einer Schraubenfeder 32 in einen in Figur 1 unteren Totpunkt beaufschlagt. Der Pumpenkolben 28 und das Pumpengehäuse 26 begrenzen einen Förderraum 34. Dieser Förderraum 34 ist über ein Einlassventil 36 mit der Niederdruckleitung 16 verbindbar. Ferner ist der Förderraum 34 über ein Auslassventil 38 mit der Hochdruckleitung 20 verbindbar.

Sowohl das Einlassventil 36 als auch das Auslassventil 38 sind als Rückschlagventile ausgeführt. Nicht dargestellt, aber möglich ist dabei eine Ausführung des Einlassventils 36 als Mengensteuerventil. Bei einem solchen kann das Einlassventil 36 während eines Förderhubs des Pumpenkolbens 28 zwangsweise geöffnet werden, so dass der Kraftstoff nicht in das Kraftstoffrail 22, sondern zurück in die Niederdruckleitung 16 gefördert wird. Hierdurch kann die von der Kolben-Kraftstoffpumpe 18 in das Kraftstoffrail 22 geförderte Kraftstoffmenge eingestellt werden.

Der Pumpenkolben 28 ist in einem Pumpenzylinder 40 geführt, der insoweit Teil des Pumpengehäuses 26 ist. Der Pumpenkolben 28 weist an einem dem Förderraum 34 zugewandten Ende einen in Figur 1 oberen Endabschnitt 42 auf. In der Umgebung dieses oberen Endabschnitts 42 weist der Pumpenkolben 28 ferner einen kreisringartigen Absatz 44 in der Art eines radial abstehenden umlaufenden Kragens auf. Eine Dichtung 46 kommt an dem Pumpenkolben 28 bzw. an dem Absatz 44 zur Anlage.

An seinem dem Förderraum 34 abgewandten Ende weist der Pumpenkolben 28 ferner einen in Figur 1 unteren Endabschnitt 52 auf. In der Umgebung dieses unteren Endabschnitts 52 ist eine Führungshülse 54 am Pumpengehäuse 26 fest angeordnet. Zwischen der Führungshülse 54 und dem Pumpengehäuse 26 ist eine O-Ring-Dichtung 56 in einer Nut 58 vorgesehen. Die Führungshülse 54 weist einen Zylinderabschnitt 60 auf, der sich koaxial zum Pumpenkolben28 erstreckt und durch welchen die Schraubenfeder 32 geführt ist. Die Schraubenfeder 32 taucht entlang einer Kolbenlängsachse 62 zumindest abschnittsweise in eine Federaufnahmenut 64 der Führungshülse 54 ein, wo sich sich gegen die Führungshülse 54 axial abstützt.

Die Führungshülse 54 weist ferner im Inneren einen kreiszylindrischen Aufnahmeabschnitt 66 auf, der im Wesentlichen durch die innere Umfangswand des Zylinderabschnitts 60 gebildet wird. In diesem Aufnahmeabschnitt 66 ist ein ringförmiges Dichtelement 68 relativ zum Pumpengehäuse 26 ortsfest angeordnet, wobei das Dichtelement 68 einen H-förmigen Querschnitt hat. In einem sich am abragenden Ende des Zylinderabschnitts nach radial einwärts erstreckenden Kragenabschnitt 70 ist ferner ein Führungselement 72 ebenfalls relativ zum Pumpengehäuse 26 ortsfest angeordnet. Dieses somit in axialer Richtung des Pumpenkolbens 28 gesehen von der Dichtung 46 deutlich beabstandete Führungselement 72 stellt zusammen der Dichtung 46 die Führung bzw. Zweipunktlagerung des Pumpenkolbens 28 bereit.

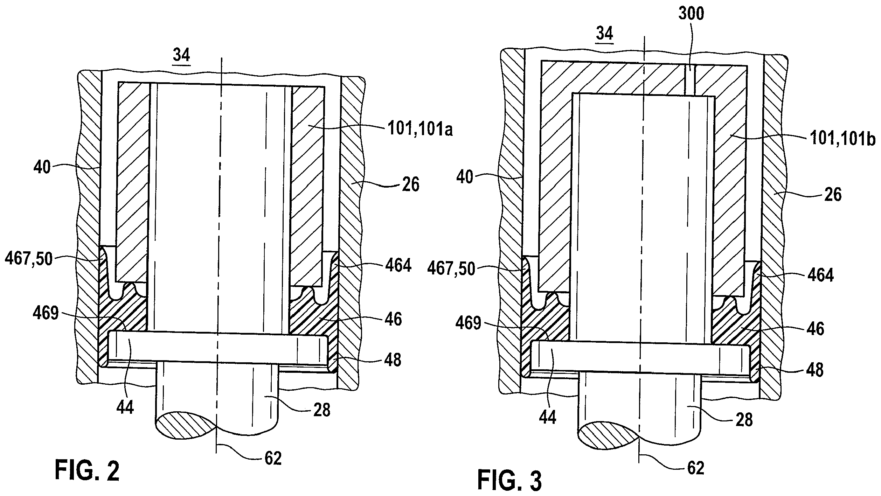

Die Ausgestaltung des Bereichs der Dichtung 46 und ihrer Montage ist vorliegend von besonderer Bedeutung. Auf diese Aspekte wird daher unter Bezugnahme auf die nachfolgenden Figuren 2 - 7 im Detail eingegangen.

Figur 2 zeigt den Bereich der Dichtung 46 der Kolben-Kraftstoffpumpe 18. In einem in Figur 2 unteren Bereich ist die Dichtung 46 soweit über den Absatz 44 des Pumpenkolbens 28 geschoben, dass sie an einer an ihr ausgebildeten Schulter 469 zur axialen Anlage an dem Absatz 44 kommt. Insbesondere der radial außerhalb von der äußeren Mantelfläche des Absatzes 44 vorhandene Materialbereich der Dichtung 46 bildet einen Lager- bzw. Führungsbereich 48, durch den der Pumpenkolben 28 gleitend im Pumpenzylinder 40 geführt und radial gelagert ist.

Der Führungsbereich 48 weist von einer inneren Umfangswand des Pumpenzylinders 40 einen in den Figuren nicht erkennbaren Abstand von etwa 2/100 mm auf. In axialer Richtung, das heißt entlang der Kolbenlängsachse 62, erstreckt sich zum Förderraum 34 hin im Anschluss an den Führungsbereich 48 der als Dichtlippe 467 ausgebildete Abdichtbereich 50. Die Dichtlippe 467 erstreckt sich dabei als an den Führungsbereich 48 angeformter und nach radial außen elastisch vorgespannter Rohrabschnitt im Wesentlichen koaxial zum Pumpenkolben 28. Die Dichtlippe 467 liegt an der inneren Umfangswand des Pumpenzylinders 40 an. Der Führungsbereich 48 und der Abdichtbereich 50 sind in diesem Beispiel einteilig ausgebildet.

Auf den Pumpenkolben 28 ist eine Kappe 101 axial aufgeschoben, die mit der Dichtung 46 radial einwärts der Dichtlippe 467 und arbeitsraumseitig der Schulter 469 zur Anlage kommt. Die Kappe 101 ist durch radiale Pressung auf dem Pumpenkolben 28 festgesetzt und übt eine axial wirkende Kraft auf die Dichtung 46 aus. Die zwischen der Kappe 101 und dem Absatz 44 des Pumpenkolbens 28 angeordnete Dichtung 46 steht somit unter einer axialen Vorspannung.

Die Kappe 101 ist in diesem Beispiel als Hülse 101a ausgebildet, das heißt sie hat die Gestalt eines zweiseitig offenen Rings oder Rohrabschnitts. Die Hülse 101a ist vollständig auf den Pumpenkolben 28 aufgeschoben und schließt mit diesem arbeitsraumseitig bündig ab. Alternativ wäre gleichwohl auch ein noch weiteres Aufschieben der Hülse 101a auf den Pumpenkolben 28 bzw. ein arbeitsraumseitiges Überstehen der Hülse 101a grundsätzlich möglich und gegebenenfalls praktikabel.

Eine Alternative zur Ausbildung der Kappe 101 als Hülse 101a ist in der Figur 3 gezeigt. Hierbei ist die Kappe als Becher 101b ausgebildet. Der Becher 101b weist einen Becherboden und eine Becherwand auf und ist mit seinem offenen Ende voran auf den Pumpenkolben 28 aufgeschoben.

In dem in der Figur 3 dargestellten Beispiel ist der Becher 101b vollständig auf den Pumpenkolben 28 aufgeschoben. Insofern kommt sein Boden an der Stirnseite des Kolbens zur Anlage.

In diesem Beispiel weist der Becherboden in Schnittebene der Figur 3 ein kleines Loch 300 auf, durch das Luft beim Aufschieben des Bechers 101b auf den Pumpenkolben 28 aus dem Becher entweichen kann.

Die Kappe 101 kann grundsätzlich, insbesondere in den Ausführungsformen als Hülse 101a oder als Becher 101b, als Tiefziehteil, zum Beispiel aus Stahl hergestellt sein. Bevorzugt besteht die Kappe 101 aus einem Material, dessen Wärmeausdehnungskoeffizient mit dem des Pumpenkolbens 28 übereinstimmt oder annähernd übereinstimmt. Die Kappe 101 kann beispielsweise aus dem gleichen Material wie der Pumpenkolben 28 bestehen. Die Kappe 101 kann ferner beispielsweise mit einer Wandstärke von 1mm ausgeführt sein.

In den vorangehenden Beispielen ist die Dichtung 46 axial zwischen der Kappe 101 und einem an dem Pumpenkolben 28 einstückig ausgebildeten Absatz 44 ausgebildet. Grundsätzlich ist die Einstückigkeit nicht zwingend erforderlich. Eine fertigungstechnische Vereinfachung ist dadurch möglich, dass der Absatz 44 durch einen in eine Nut des Pumpenkolbens 28 eingelegten Sprengring realisiert ist.

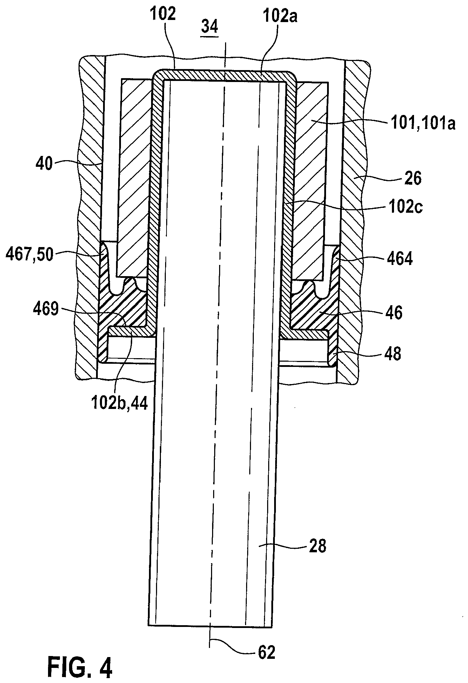

Eine nochmals andere diesbezügliche Lösung zeigt die Figur 4: Hierbei ist ein hutförmiges Halteelement 102 mit seiner Öffnung voran über das arbeitsraumseitige Ende des Pumpenkolbens 28 geschoben. Ein Boden 102a des Halteelements 102 kommt hierbei an der Stirnseite des Pumpenkolbens 28 axial zur Anlage, eine Seitenwand 102c des Halteelement 102 kommt radial an dem Pumpenkolben 28 zur Anlage. Eine dem Boden 102a des Halteelements 102 axial gegenüberliegende Krempe 102 b des Halteelements 102 ist radial abgespreizt und bildet insofern einen Absatz 44 aus.

Wie in den in den Figuren 2 und 3 gezeigten Beispielen ist die Dichtung 46 an dem insofern funktionsgleich vorgesehenen Absatz 44 in Anlage.

Der Pumpenkolben 28 weist in diesem Beispiel entlang seiner gesamten Länge einen einheitlichen Durchmesser auf. Eine besonders einfache und kostengünstige Fertigung beispielsweise eine Bearbeitung des Pumpenkolbens 28 mittels Durchgangsschleifen, also mit ortsfester Schleifscheibe, ist auf diese Weise möglich.

In den in den Figuren 2, 3 und 4 gezeigten Ausführungsbespielen ist vorgesehen, dass die Dichtung 46 zumindest eine einstückig angeformte Noppe 461 aufweist, die in eine axiale Richtung weist, und dass die Dichtung 46 über die zumindest eine Noppe 461 axial anliegt. Beispielhaft weisen die Dichtungen 46 in diesen Beispielen sogar jeweils mehrere Noppen 461 auf, die in Richtung des Arbeitsraums 34 weisen, und über die die Dichtung 46 an der Kappe 101 anliegt und hierdurch axial vorgespannt ist. Die Noppen 461 weisen in diesem Beispiel eine halbkugelige Gestalt auf. Alternativ könnten sie auch kegelig oder kegelstumpfförmig sein. Die Noppen 461 haben zum Beispiel einen Durchmesser von etwa 0,6mm, etwa 10% des Durchmessers der Dichtung 46 und eine Höhe von etwa 0,3mm, etwa 10% der Höhe der Dichtung 46.

Wenngleich die Kappe 101 an den Noppen 461 unter Spannung anliegt, ist die resultierende Verformung der Noppen 461 doch so vergleichsweise gering, dass ein Anliegen der Kappe 101 an einem Bereich der Dichtung 46, der in Umfangsrichtung zwischen den Noppen 461 liegt, unterbleibt.

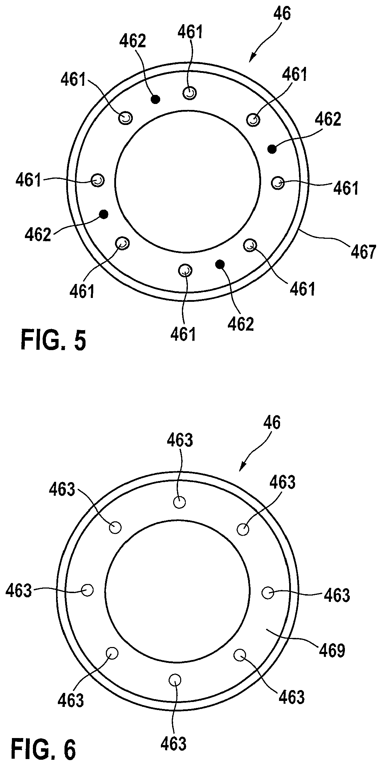

Die Dichtung 46 ist in Figur 5 in Aufsicht, mit Bezug auf die Figuren 2, 3 und 4 von oben, gezeigt. Es wird erkennbar, dass insgesamt 8 einstückig an die Dichtung 46 angeformte Noppen 461 in Richtung des Arbeitsraums 34 weisen, die auf einem gedachten Kreisring um die Kolbenachse 62 angeordnet sind und die zueinander in Umfangsrichtung jeweils um 45° beabstandet sind.

Selbstverständlich könnten die Noppen 461 zusätzlich oder alternativ auch auf der axial gegenüberliegenden Seite der Dichtung 46, an dem Absatz 44, ansonsten unverändert ausgebildet sein.

Die Dichtung 46 besteht in diesen Beispielen aus dem faserverstärkten thermoplastischen Material PEEK 150CA30 oder PA66CF20 und ist mittels Spritzguss hergestellt. Über die nachfolgend erläuterte Spritzgusstechnik, insbesondere die Anordnung der Anspritzpunkte 462 und der Entlüftungspunkte 463, kann erreicht werden, dass die Ausrichtung der Fasern ungeordnet ist.

Hierbei erfolgt der Spritzguss über Anspritzpunkte 462, die in der Figur 5 zu sehen sind, mit den Noppen 461 auf einer gemeinsamen gedachten Kreislinie liegen und um 90° in Umfangsrichtung voneinander beabstandet sind. Die Anspritzpunkte 462 erscheinen am gefertigten Produkt beispielsweise als kleine ringförmige oder sichelförmige Grate oder als kleine Warzen. Die Anspritzpunkte haben einen Durchmesser von oder von nicht mehr als 0,9mm.

Der Spritzguss erfolgt ferner über Entlüftungspunkte 463 die auf der axial gegenüberliegenden Seite der Dichtung 46, in den Figuren 2, 3 und 4 unten angeordnet sind. Sie sind in der Figur 6 zu sehen. Vorliegend sind 8 Entlüftungspunkte 463 vorgesehen, die auf einer gedachten Kreislinie liegen und um 45° in Umfangsrichtung voneinander beabstandet sind. Die Entlüftungspunkte 463 haben einen Durchmesser von oder von nicht mehr als 0,7mm und erscheinen am gefertigten Produkt beispielsweise als kleine Kavitäten.

Es kann vorgesehen sein, dass Anspritzpunkte 462 und Entlüftungspunkte 463 stets in Umfangsrichtung zueinander versetzt angeordnet sind. Auf diese Weise erfolgt eine verbesserte Durchmischung des verflüssigten Spritzgussmaterials in der Spritzgussform und eine Vermeidung einer gerichteten Ausrichtung der Fasern und eine Vermeidung anisotroper Materialeigenschaften der Dichtung 46.

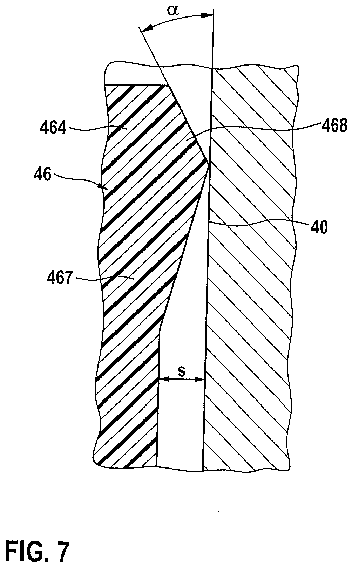

Ein axialer Endbereich 464 der Dichtung 46 ist vorliegend arbeitsraumseitig an der Dichtlippe 467 ausgebildet. Ein entsprechend nochmals vergrößerter Ausschnitt der Dichtung 46 ist in der Figur 7 dargestellt.

Es ist vorgesehen, dass eine radial außen liegende Fläche der Dichtung 46, die einer Innenfläche des Pumpenzylinder 40 gegenüberliegt, in einem axialen Endbereich 464 der Dichtung 46 unter einem Winkel α von 10° bis 60° zur Innenwand des Pumpenzylinders 40 radial nach innen geneigt ist. Dies hat zur Wirkung oder alternativ ist vorgesehen, dass eine Relativbewegung zwischen Pumpenzylinder 40 und Pumpenkolben 28 in axialer Richtung, insbesondere in Richtung auf den Arbeitsraum 34 zu, ein Abheben der Dichtung 46 von dem Pumpenzylinder 28 in eine radial nach innen weisende Richtung begünstigt. In diesem Fall bildet sich zwischen Dichtung 46 und Pumpenzylinder 40 ein aus Kraftstoff bestehender Flüssigkeitsfilm aus, der bei geringfügiger Leckage den Verschleiß der Kolben-Kraftstoffpumpe 18 erheblich vermindert.

Zu diesem Zweck ist an bzw. auf der Dichtlippe 467 ein nach außen weisender, umlaufender Steg 468 einstückig angeformt, der im Querschnitt in Längsrichtung etwa die Form eines gleichschenkligen Dreiecks aufweist, von dem die zwei gegenüberliegenden spitze Ecken in axiale Richtungen weisen und dessen dritte stumpfe Ecke an dem Pumpenzylinder 40 (statisch) anliegt. Es ist vorgesehen, dass lediglich dieser Steg (statisch) an dem Pumpenzylinder 40 zur Anlage kommt, während die Dichtung 46 bzw. die Dichtlippe 467 im Übrigen durch einen Spalt von dem Pumpenzylinder 40 beabstandet ist. Eine Breite s des Spalts beträgt beispielsweise 20µm. Bei Relativbewegung ist, wie oben geschildert, ferner auch ein Abheben des Stegs 468 von dem Pumpenzylinder 40 vorgesehen.

## Patentansprüche

1. Kolben-Kraftstoffpumpe (18) für eine Brennkraftmaschine mit einem Pumpengehäuse (26), in dem ein von dem Pumpenkolben (28) begrenzter Arbeitsraum (34) ausgebildet ist, der über ein elektrisch ansteuerbares Einlassventil (36) mit einem Pumpeneinlass verbunden ist, und mit einem Pumpenzylinder (40) und einem im Pumpenzylinder (40) axial verschiebbaren Pumpenkolben (28), **dadurch gekennzeichnet, dass** die Kolben-Kraftstoffpumpe (18) eine am Umfang des Pumpenkolbens (28) angeordnete Dichtung (46) aufweist, die zwischen einer auf den Pumpenkolben (28) aufgeschobenen Kappe (101), die auf der dem Arbeitsraum (34) zugewandten Seite der Dichtung (46) angeordnet ist und die ein aus Stahl bestehendes Tiefziehteil ist, und einem am Pumpenkolben (28) ausgebildeten oder einem am Pumpenkolben (28) festgelegten Absatz (44), der auf der vom Arbeitsraum (34) abgewandten Seite der Dichtung (44) angeordnet ist, axial vorgespannt ist.

2. Kolben-Kraftstoffpumpe (18) nach Anspruch 1, **dadurch gekennzeichnet, dass** die Kappe (101) die Form einer Hülse aufweist.

3. Kolben-Kraftstoffpumpe (18) nach Anspruch 1, **dadurch gekennzeichnet, dass** die Kappe (101) die Form eines Bechers aufweist.

4. Kolben-Kraftstoffpumpe (18) nach Anspruch 3, **dadurch gekennzeichnet, dass** die Kappe (101) mit einem offenen Ende voran auf den Pumpenkolben (28) aufgeschoben ist.

5. Kolben-Kraftstoffpumpe (18) nach Anspruch 4, **dadurch gekennzeichnet, dass** die Kappe (101) soweit auf den Kolben Pumpenkolben (28) aufgeschoben ist, dass ein Bodenabschnitt der Kappe (101) auf dem Pumpenkolben anliegt.

6. Kolben-Kraftstoffpumpe (18) nach einem der vorangehenden Ansprüche, **dadurch gekennzeichnet, dass** die Kappe (101) auf dem Pumpenkolben (28) radial verpresst ist.

7. Kolben-Kraftstoffpumpe (18) nach einem der vorangehenden Ansprüche, **dadurch gekennzeichnet, dass** die Kappe (101) an dem Pumpenkolben (28) spaltfrei anliegt.

8. Kolben-Kraftstoffpumpe (18) nach einem der vorangehenden Ansprüche, **dadurch gekennzeichnet, dass** die Dichtung (46) zwischen der Kappe (101) und einem Absatz (44) des Pumpenkolbens (28) axial gehalten, insbesondere axial vorgespannt ist.

9. Kolben-Kraftstoffpumpe (18) nach einem der Ansprüche 1 bis 7, **dadurch gekennzeichnet, dass** die Dichtung (46) zwischen der Kappe (101) und einem am Pumpenkolben (28) fixierten Halteelement (102) axial gehalten und axial vorgespannt ist.

10. Kolben-Kraftstoffpumpe (18) nach einem der vorangehenden Ansprüche, **dadurch gekennzeichnet, dass** die Dichtung (46) ein faserverstärktes thermoplastisches Material aufweist.

11. Kolben-Kraftstoffpumpe (18) nach einem der vorangehenden Ansprüche, **dadurch gekennzeichnet, dass** die Dichtung (46) aus einem mit Carbonfaser verstärktem Polyetheretherketon besteht.

12. Kolben-Kraftstoffpumpe (18) nach einem der vorangehenden Ansprüche, **dadurch gekennzeichnet, dass** die Dichtung (46) zumindest eine Noppe (461) zur Einbringung einer axialen Vorspannung in die Dichtung (46) aufweist.

13. Kolben-Kraftstoffpumpe (18) nach einem der vorangehenden Ansprüche, **dadurch gekennzeichnet, dass** die Dichtung (46) eine ringförmige Grundstruktur aufweist, die mittels Spritzguss mit axialer Anspritzrichtung hergestellt ist.

## Claims

1. Fuel piston pump (18) for an internal combustion engine with a pump housing (26), in which a working space (34) is configured which is delimited by the pump piston (28) and is connected via an electrically actuable inlet valve (36) to a pump inlet, and with a pump cylinder (40) and a pump piston (28) which can be displaced axially in the pump cylinder (40), **characterized in that** the fuel piston pump (18) has a seal (46) which is arranged on the circumference of the pump piston (28), is prestressed axially between a cap (101), which is pushed onto the pump piston (28), is arranged on that side of the seal (46) which faces the working space (34), and which is a deep-drawn part which consists of steel, and a shoulder (44) which is configured on the pump piston (28) or a shoulder (44) which is fixed on the pump piston (28), which shoulder (44) is arranged on that side of the seal (44) which faces away from the working space (34).

2. Fuel piston pump (18) according to Claim 1, **characterized in that** the cap (101) has the form of a sleeve.

3. Fuel piston pump (18) according to Claim 1, **characterized in that** the cap (101) has the form of a cup.

4. Fuel piston pump (18) according to Claim 3, **characterized in that** the cap (101) is pushed with an open end first onto the pump piston (28).

5. Fuel piston pump (18) according to Claim 4, **characterized in that** the cap (101) is pushed onto the piston pump piston (28) to such an extent that a bottom section of the cap (101) bears on the pump piston.

6. Fuel piston pump (18) according to one of the preceding claims, **characterized in that** the cap (101) is pressed radially on the pump piston (28).

7. Fuel piston pump (18) according to one of the preceding claims, **characterized in that** the cap (101) bears without a gap against the pump piston (28).

8. Fuel piston pump (18) according to one of the preceding claims, **characterized in that** the seal (46) is held axially, in particular is prestressed axially, between the cap (101) and a shoulder (44) of the pump piston (28).

9. Fuel piston pump (18) according to one of Claims 1 to 7, **characterized in that** the seal (46) is held axially and is prestressed axially between the cap (101) and a holding element (102) which his fixed on the pump piston (28) .

10. Fuel piston pump (18) according to one of the preceding claims, **characterized in that** the seal (46) has a fibre-reinforced thermoplastic material.

11. Fuel piston pump (18) according to one of the preceding claims, **characterized in that** the seal (46) consists of a polyether ether ketone which is reinforced with carbon fibre.

12. Fuel piston pump (18) according to one of the preceding claims, **characterized in that** the seal (46) has at least one bump (461) for the introduction of an axial prestress into the seal (46).

13. Fuel piston pump (18) according to one of the preceding claims, **characterized in that** the seal (46) has an annular basic structure which is produced by means of injection moulding with an axial injection direction.

## Revendications

1. Pompe à carburant à piston (18) pour un moteur à combustion interne, comprenant un carter de pompe (26) dans lequel est formé un espace de travail (34) délimité par le piston de pompe (28), qui est relié à une entrée de pompe par le biais d'une vanne d'entrée (36) à commande électrique, et comprenant un cylindre de pompe (40) et un piston de pompe (28) qui peut se déplacer axialement dans le cylindre de pompe (40), **caractérisée en ce que** la pompe à carburant à piston (18) possède une garniture d'étanchéité (46) disposée sur le pourtour du piston de pompe (28), laquelle est précontrainte axialement entre un chapeau (101) emmanché sur le piston de pompe (28), lequel est disposé sur le côté de la garniture d'étanchéité (46) faisant face à l'espace de travail (34) et est une pièce emboutie constituée d'acier, et un talon (44) formé sur le piston de pompe (28) ou calé au niveau du piston de pompe (28), qui est disposé sur le côté de la garniture d'étanchéité (44) à l'opposé de l'espace de travail (34).

2. Pompe à carburant à piston (18) selon la revendication 1, **caractérisée en ce que** le chapeau (101) présente la forme d'une douille.

3. Pompe à carburant à piston (18) selon la revendication 1, **caractérisée en ce que** le chapeau (101) présente la forme d'un godet.

4. Pompe à carburant à piston (18) selon la revendication 3, **caractérisée en ce que** le chapeau (101) est emmanché sur le piston de pompe (28) avec une extrémité ouverte en avant.

5. Pompe à carburant à piston (18) selon la revendication 4, **caractérisée en ce que** le chapeau (101) est emmanché sur le piston piston de pompe (28) jusqu'à ce qu'une portion de fond du chapeau (101) repose contre le piston de pompe.

6. Pompe à carburant à piston (18) selon l'une des revendications précédentes, **caractérisée en ce que** le chapeau (101) est pressé dans le sens radial sur le piston de pompe (28).

7. Pompe à carburant à piston (18) selon l'une des revendications précédentes, **caractérisée en ce que** le chapeau (101) repose sans jeu contre le piston de pompe (28) .

8. Pompe à carburant à piston (18) selon l'une des revendications précédentes, **caractérisée en ce que** la garniture d'étanchéité (46) est maintenue axialement, notamment précontrainte axialement, entre le chapeau (101) et un talon (44) du piston de pompe (28).

9. Pompe à carburant à piston (18) selon l'une des revendications 1 à 7, **caractérisée en ce que** la garniture d'étanchéité (46) est maintenue axialement et précontrainte axialement entre le chapeau (101) et un élément de maintien (102) calé au niveau du piston de pompe (28).

10. Pompe à carburant à piston (18) selon l'une des revendications précédentes, **caractérisée en ce que** la garniture d'étanchéité (46) possède un matériau thermoplastique renforcé par des fibres.

11. Pompe à carburant à piston (18) selon l'une des revendications précédentes, **caractérisée en ce que** la garniture d'étanchéité (46) se compose d'un polyétheréthercétone renforcé par des fibres de carbone.

12. Pompe à carburant à piston (18) selon l'une des revendications précédentes, **caractérisée en ce que** la garniture d'étanchéité (46) possède au moins un téton (461) destiné à introduire une précontrainte axiale dans la garniture d'étanchéité (46).

13. Pompe à carburant à piston (18) selon l'une des revendications précédentes, **caractérisée en ce que** la garniture d'étanchéité (46) possède une structure de base de forme annulaire qui est produite au moyen du moulage par injection avec direction de pulvérisation axiale.
